# EUROPEAN PATENT SPECIFICATION

(11) **EP 3 683 172 B1**
(45) Date of publication and mention of the grant of the patent: **16.08.2023**
(21) Application number: 18857318.2
(22) Date of filing: 17.07.2018
(51) Int. Cl.: B65G 15/42, G01N 21/35, B07C 5/342, B07C 5/36

(54) **MACHINE FOR THE OPTICAL SEPARATION OF WASTE**
MASCHINE FÜR DIE OPTISCHE TRENNUNG VON ABFÄLLEN
MACHINE DE SÉPARATION OPTIQUE DE RÉSIDUS

(30) Priority: 15.09.2017 WO PCT/ES2017/070613
(43) Date of publication of application: 22.07.2020
(73) Proprietor: Ecoembalajes España, S.A., 28046 Madrid (ES)
(72) Inventor: RAMOS-CATALINA CLEMENTE, Patricia, 28046 Madrid (ES); ESPINAR JIMENEZ, Jesús, 28016 Madrid (ES)
(74) Representative: Capitán García, Maria Nuria
(86) International application number: PCT/ES2018/070511
(87) International publication number: WO 2019/053308

(56) References cited:
- EP-A2- 1 698 888
- CN-A- 103 787 024
- CN-Y- 201 280 329
- DE-A1- 3 723 640
- KR-B1- 101 556 228
- US-A1- 2009 306 816
- US-A1- 2013 168 209

## Description

### FIELD OF THE INVENTION

The present invention is encompassed in the field of waste material recovery, specifically, with a machine for the optical separation of packaging waste.

### BACKGROUND OF THE INVENTION

Machines for the optical separation of packaging waste are known, which comprise a central processing unit (CPU), an acceleration conveyor belt, an infrared sensor, a blower-valve block with at least one blower valve, and a blow-separation box.

The acceleration conveyor belt supports and transports the waste to be sorted. This belt is an auger flat conveyor belt arranged, substantially horizontally, between two rollers that provide longitudinal movement to the upper or transport face of said conveyor belt.

For its part, the infrared sensor is arranged above the acceleration conveyor belt. And it is adapted to sense a wavelength of a waste item that travels on the acceleration conveyor belt.

The blower-valve block, which is arranged below the end of the acceleration conveyor belt, is responsible for driving the sensed waste item towards a determined blow-separation box.

As for the CPU, it is responsible for actuating the blower-valve block at a determined moment in time, when the wavelength of the sensed waste item corresponds to a predetermined wavelength value, i.e., said value is previously provided and stored in said CPU. The CPU determines the moment in time based on the speed of the acceleration conveyor belt and the distance between the infrared sensor and the blower-valve block. In other words, the CPU has the speed of the acceleration conveyor belt programmed, as well as the distance between the reading point of the waste item wavelength and the blower-valve block.

Thus, when the package of the material to be sorted is transported on the acceleration conveyor belt, and it is read by the sensor light beam, the CPU calculates the time said package will take to reach the height of the blower-valve block in order to, when the time comes, activate the valve block and produce, by blowing, the separation of the package towards the corresponding blow-separation box.

However, due to the speed of the acceleration conveyor belt, approximately 3 m/s, the inertia movement of the package when falling on the conveyor belt and the round shape of many of the packages, sometimes said package does not stabilise and tends to roll on the acceleration conveyor belt. This represents a major problem for the proper functioning of the machine, because, when the package rolls on the belt, there is a variation of its position that will involve a different time to reach the blower-valve block from that calculated by the CPU, whereby the activation of the blower-valve block is performed at a time when the package to be separated is not at the height of the blower-valve block, causing the loss of the sorting of said material.

Another disadvantage of known optical separation machines is that the waste, when falling on the acceleration conveyor belt, is not distributed homogeneously on the available width of said acceleration conveyor belt, which generates an accumulation of waste at a certain part, or parts, of the belt, which prevents the correct detection (by the infrared sensor) and separation (by the corresponding blower valve) of the packaging waste transported by the acceleration conveyor belt.

For example, the patent document EP1698888 shows an apparatus for automatically inspecting a stream of matter comprised of objects and automatically sorting said objects, comprising emitting means serving to emit a detection medium to be active at said matter, first and second receiving means of respective first and second inspection arrangements disposed side-by-side transversely of said stream, separate from each other and arranged to receive from said matter detection medium varied by variations in said matter, first and second detecting means of said respective first and second inspection arrangements serving to receive the varied medium by reflection from the receiving means, and to generate first and second detection data respectively in dependence upon the variations in said medium, and data-obtaining means connected to said first and second detecting means and serving to obtain said detection data therefrom, and removing means serving to remove objects from said stream in dependence on said detection data.

Also is known, from the patent document DE3723640, a conveyor belt for conveying articles of marble, stone and the like being subjected to various operations of grinding, polishing and for maintaining the articles stable during said operations, along the path of the conveyor, which comprises a plurality of inclined projections of right angle triangular cross section in the longitudinal direction and rectangular when viewed above the conveyor and located on the surface of the conveyor belt along the entire width thereof and forming rows along the entire length thereof, said projections of each row being alternately arranged in opposite directions along the longitudinal direction of the conveyor, and being made of a material of predetermined mechanical properties, depending upon the particular applications of use, said projections under the weight of said article being conveyed being capable of deforming slightly, therefore ensuring sufficient adherence of the article being conveyed and the immobility of said article with respect to said conveyor belt, even under the actions of longitudinal thrusts in one or the opposite direction.

For this reason, a machine for the optical separation of waste that overcomes the aforementioned drawbacks needs to be designed in a simple and economical way.

### DESCRIPTION OF THE INVENTION

The present invention is established and characterised in the independent claims, while the dependent claims describe other characteristics thereof.

The subject matter of the invention is a machine for the optical separation of waste, as defined in claim 1. The technical problem to be solved is how to avoid that the waste of material subject to sorting roll on the acceleration conveyor belt, as well as, avoid waste from accumulating in a certain part or parts of same thus guaranteeing its correct sorting.

The machine comprises in particular:
- an acceleration conveyor belt, arranged substantially horizontally, adapted to support and transport at least one waste item to be sorted,
- an infrared sensor, arranged above the acceleration conveyor belt, adapted to sense a wavelength of the waste item transported by the acceleration conveyor belt,
- a blower-valve block, arranged below an end of the acceleration conveyor belt, adapted to drive the waste item towards a determined blow-separation box, and
- a CPU adapted to actuate the blower-valve block at a determined moment in time.

When the wavelength of the waste item sensed by the infrared sensor corresponds to a predetermined wavelength value, the CPU determines the moment in time at which the blower-valve block must be actuated, based on a speed of the acceleration conveyor belt and a distance between the infrared sensor and said blower-valve block.

For its part, an upper face of the acceleration conveyor belt comprises a plurality of stabilisation means in the form of projections and/or recesses. The projections and/or recesses are adapted to prevent rolling of the waste item on the acceleration conveyor belt, thus maintaining a same position of the waste item on the acceleration conveyor belt, between the infrared sensor and the blower-valve block.

Additionally, the stabilisation means cause the flow of material waste to be distributed homogeneously on the available width of the acceleration conveyor belt, so that a laminar flow of material is obtained on the acceleration conveyor belt, with the minimum overlapping of waste items on each other.

In this way, the sorting of material waste subject to sorting, for example, plastic packages, is achieved, increasing the efficiency of the machine, avoiding the loss of recyclable waste.

### BRIEF DESCRIPTION OF THE DRAWINGS

This specification is supplemented by a set of drawings illustrating the preferred embodiment but which are never intended to limit the invention.
Figure 1 represents a scheme of the machine for the optical separation of waste.
Figure 2 represents a schematic top view of a first embodiment of the acceleration conveyor belt used in the machine of Figure 1.
Figure 3 represents an enlarged schematic detail of a first embodiment of the stabilisation means in the form of projections of the first embodiment of the acceleration conveyor belt of Figure 2.
Figure 4 represents a schematic enlarged detail of a second embodiment of the stabilisation means in the form of projections of the first embodiment of the acceleration conveyor belt of Figure 2.
Figure 5 represents a schematic enlarged detail of a third embodiment of the stabilisation means in the form of projections of the first embodiment of the acceleration conveyor belt of Figure 2.
Figure 6 represents a schematic enlarged detail of a fourth embodiment of the stabilisation means in the form of projections of the first embodiment of the acceleration conveyor belt of Figure 2.
Figure 7 represents a schematic top view of a second embodiment of the acceleration conveyor belt used in the machine of Figure 1.
Figure 8 represents a schematic top view of a third embodiment of the acceleration conveyor belt used in the machine of Figure 1.
Figure 9 represents a schematic top view of a fourth embodiment of the acceleration conveyor belt used in the machine of Figure 1.
Figure 10 represents a schematic enlarged detail of the acceleration conveyor belt showing a waste item retained between two stabilisation means in the form of projections.
Figure 11 represents a schematic enlarged detail of the acceleration conveyor belt showing a waste item retained in a stabilisation means in the form of a recess.
Figure 12 represents a schematic top view of a fifth embodiment of the acceleration conveyor belt used in the machine of Figure 1.

### DETAILED DESCRIPTION OF THE INVENTION

The present invention is a machine for the optical separation of waste, for example, for the sorting of plastic packages, for recycling.

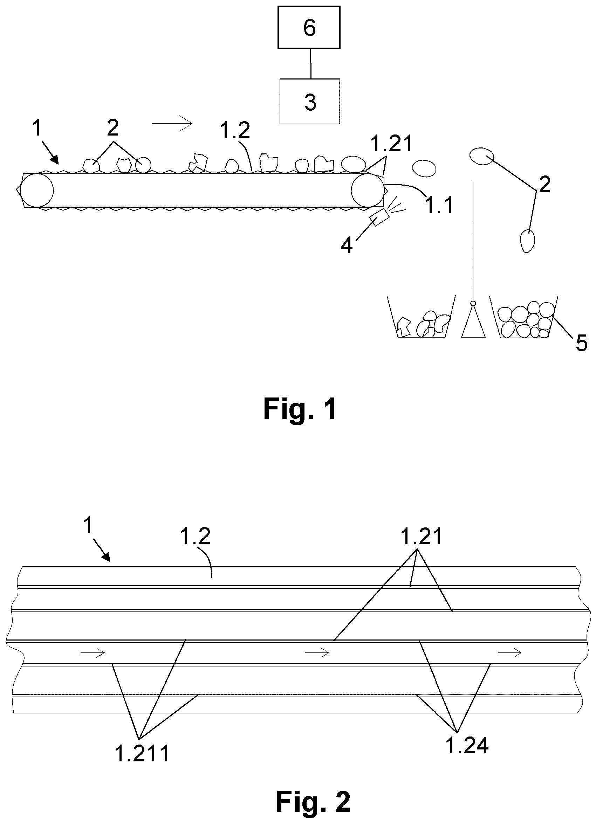

As shown in Figure 1, the machine for the optical separation of waste comprises:
- an acceleration conveyor belt (1) adapted to support and transport at least one waste item (2) to be sorted,
- an infrared sensor (3), arranged above the acceleration conveyor belt (1), which is adapted to sense a wavelength of the waste item (2) transported by the acceleration conveyor belt (1),
- a blower-valve block (4), with at least one blower valve, arranged below an end (1.1) of the acceleration conveyor belt (1), which is adapted to drive the waste item (2) towards a determined blow-separation box (5), and
- a CPU (6) that is adapted to actuate the blower-valve block (4) at a determined moment in time.

Thus, when the CPU (6) receives the wavelength of the waste item (2) sensed by the infrared sensor (3) and detects that it corresponds to a predetermined wavelength value, the latter, provided to the CPU (6) previously, said CPU (6) determines the moment in time at which the corresponding blower-valve block (4) must be actuated. This moment in time is determined based on a speed of the acceleration conveyor belt (1) and a distance between the infrared sensor (3) and the blower-valve block (4), data that have been previously programmed in the CPU (6).

On its part, the acceleration conveyor belt (1) is arranged substantially horizontally, i.e., its inclination with respect to the horizontal plane (plane that is parallel to the ground) does not lead the debris (2) spilled on the acceleration conveyor belt (1) to slide on the latter, for example, said inclination does not exceed two degrees towards either of the two directions (up or down) of the vertical plane. Thereby, only waste (2) of circular or round section packages, due to the inertia movement they experience when falling on the acceleration conveyor belt (1), can roll thereon.

On the other hand, as can be seen in Figures 2, 7, 8, 9 and 12, an upper face (1.2) of the acceleration conveyor belt (1) comprises a plurality of stabilisation means (1.21) in the form of projections (1.211) and/or recesses (1.212).

The projections (1.211) and/or recesses (1.212) are adapted to prevent rolling of the waste item (2) on the acceleration conveyor belt (1), maintaining the waste item (2) in a same position on the acceleration conveyor belt (1) between the infrared sensor (3) and the blower-valve block (4).

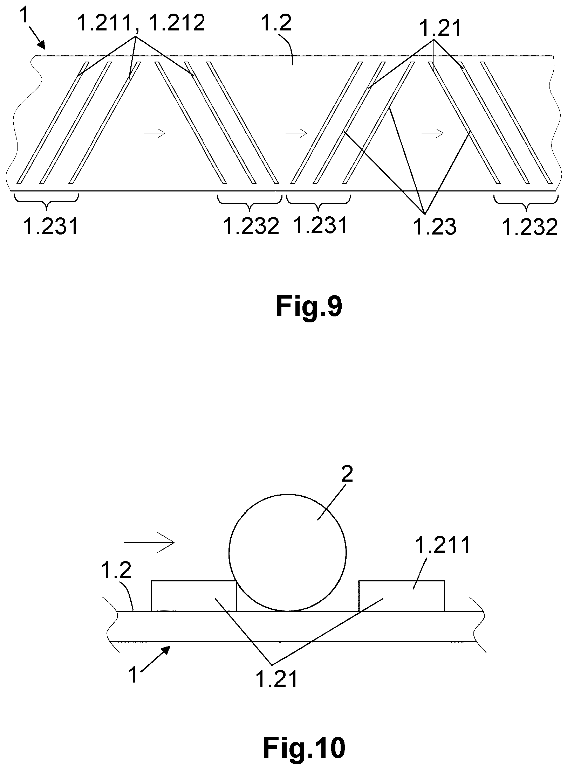

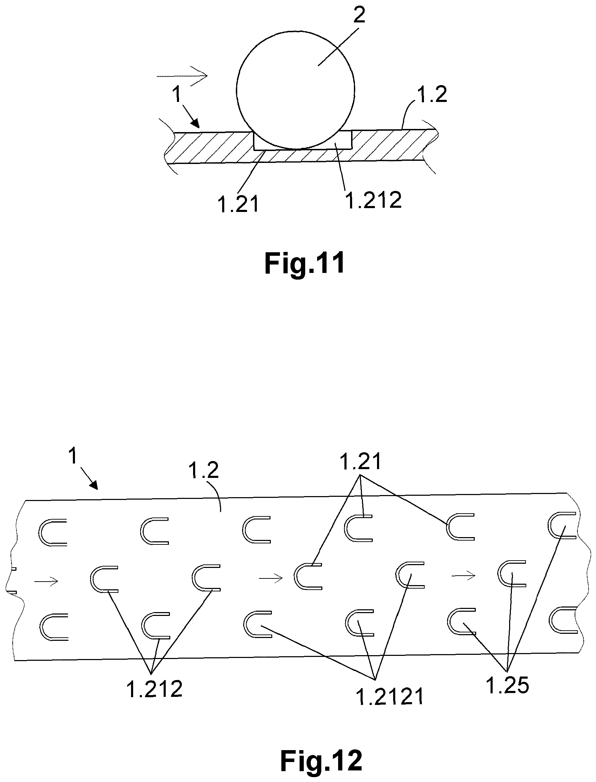

The upper side of the acceleration conveyor belt (1) may equally comprise only projections (1.211), or only recesses (1.212), or, projections and recesses (1.211, 1.212). Having the same effectiveness in preventing the rolling of the waste item (2) on the acceleration conveyor belt (1). In the case of the projections (1.211), the waste item (2) is trapped between two of them (see Figure 10), and in the case of the recesses (1.212), the waste item (2) would be trapped in the recess (1.212) itself, the plane of the upper face (1.2) of the acceleration conveyor belt (1) constituting the obstacle that prevents the rolling of the waste item (2) (see Figure 11).

Preferably, the projections (1.211) comprise a height between 0.1 mm and 9 mm, and their width could also be between 0.1 mm and 9 mm. In any case, the height of the projections (1.211) will be limited by the separation between the acceleration conveyor belt (1) and the blower-valve block (4) with which the machine has been designed.

As for the recesses (1.212), it is preferred that they comprise a depth of between 0.1 mm and 9 mm, and preferably a width of between 50 mm and 300 mm. In any case, the depth of the recesses (1.212) will be limited by the thickness of the acceleration conveyor belt (1).

In a first embodiment of the acceleration conveyor belt (1) shown in Figure 2, it is preferred that the stabilisation means (1.21) be a plurality of projections (1.211) by way of first continuous rows (1.24) extended parallel to each other along the acceleration conveyor belt (1). They could also be recesses (1.212) instead of projections (1.211), or a combination thereof.

Preferably, the first continuous rows (1.24) are separated from each other between 170 mm and 230 mm, with the view that, between them, even waste (2) of packages having a larger diameter can be trapped, for example, 2-litre plastic bottles in which soft drinks and other beverages are currently marketed.

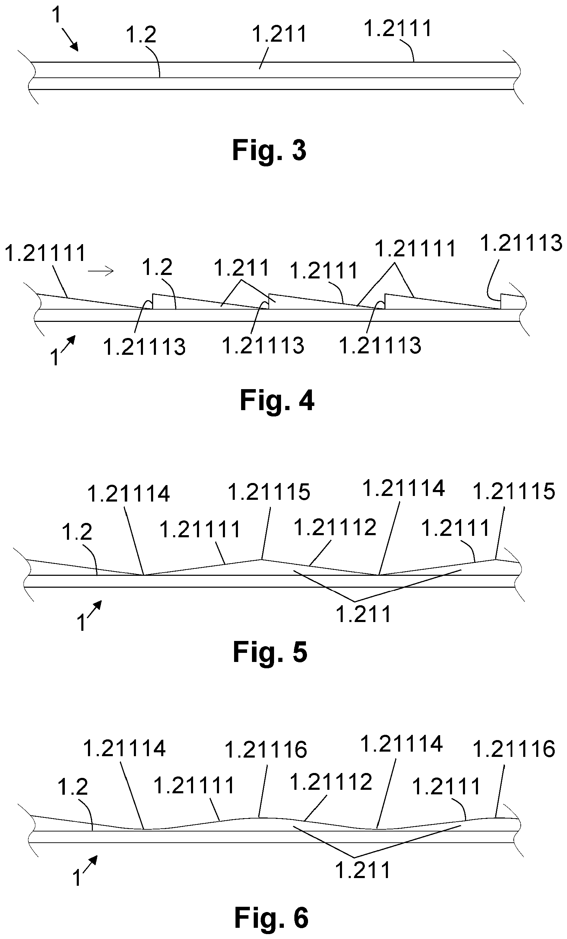

In a possible embodiment, shown in Figure 3, the projection (1.211) could comprise a flat upper surface (1.2111), which is parallel to the upper face (1.2) of the acceleration conveyor belt (1). Thus, after the possible rolling of the package waste item (2) on the upper surface (1.2111), said package waste item (2) ends up aligning with two of the projections (1.211) being trapped between them.

Likewise, as shown in Figure 4, in another possible embodiment, the projection (1.211) could comprise an upper surface (1.2111) formed by a plurality of sections of inclined planes (1.21111) arranged contiguously and with slopes towards the same direction. Thus, at the end of each inclined plane (1.21111) there is a front surface (1.21113) of the contiguous inclined plane section (1.21111), which makes it possible to stop the rolling of the package waste item on the upper surface (1.2111) and force it to align with two of the projections (1.211) to end up trapped between them.

Figure 5 shows another possible embodiment, where, the projection (1.211) also comprises an upper surface (1.2111) formed by a plurality of inclined planes (1.21111, 1.21112), but where said inclined planes (1.21111, 1.21112) are arranged contiguously and with slopes towards alternate opposite directions, forming consecutive valleys (1.21114) and peaks (1.2115). Thus, in the valleys (1.21114) stopping the rolling of the package waste item (2) on the upper surface (1.2111) is achieved, forcing it to align with two of the projections (1.211) to end up trapped between them.

In another possible embodiment, shown in Figure 6, the projection (1.211) could comprise a corrugated upper surface (1.2111), with valleys (1.21114) and ridges (1.2116). Thus, as in the previous embodiment, in the valleys (1.21114), stopping the rolling of the package waste item (2) on the upper surface (1.2111) is achieved, forcing it to align with two of the projections (1.211) to end up trapped between them.

In any of the embodiments of the Figures from 3 to 6, it is sought to facilitate that, when the waste item falls on the acceleration conveyor belt (1), it is trapped between two projections (1.211); and in case of not falling in an aligned manner with the projections (1.211), said waste item can roll on the upper surface (1.2111) of one of the projections (1.211) until being accommodated and trapped between two of the projections (1.211) of the acceleration conveyor belt (1), before reaching the infrared sensor (3). In this way, it is guaranteed that the waste is deposited in a homogeneous manner over the entire width of the acceleration conveyor belt (1) and, in addition, does not vary its position between the infrared sensor (3) and the blower-valve block (4).

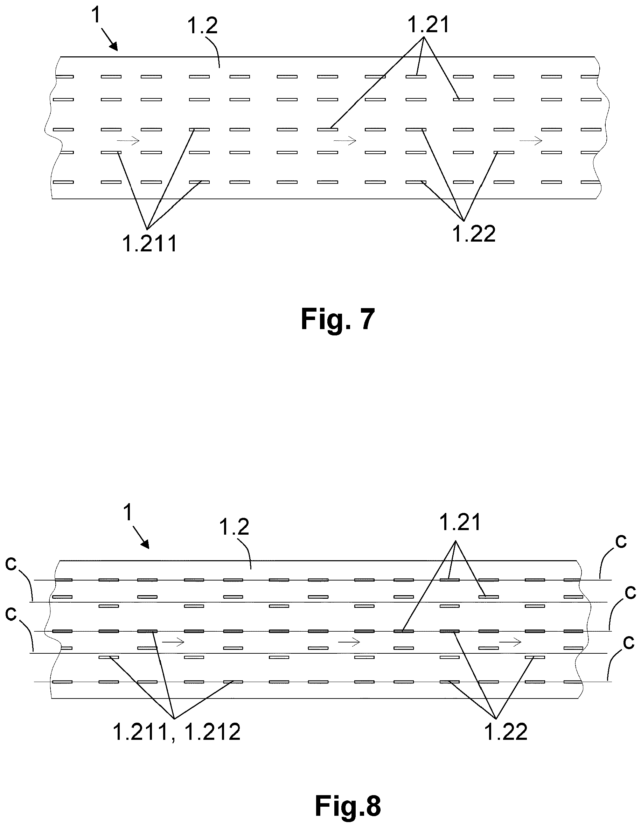

On the other hand, Figure 7 shows a second embodiment of the acceleration conveyor belt (1), where the stabilisation means (1.21), for example, projections (1.211) are arranged in a plurality of first discontinuous rows (1.22), extended parallel to the movement of the acceleration conveyor belt (1). They could also be recesses (1.212) instead of projections (1.211), or a combination thereof.

Preferably, the first discontinuous rows (1.22) of projections (1.211) are separated from each other between 170 mm and 230 mm, or, if they are recesses (1.212), the latte are preferred to have a width of between 50 mm and 300 mm In any case, as in the previous embodiment, it is sought that between them, even waste (2) of packages having a larger diameter can be trapped.

For its part, it is preferred that the projections (1.211) that make up the first discontinuous row (1.22) are separated from each other between 170 mm and 230 mm, in the same way, so that even waste (2) of packages having a larger diameter can be trapped between them should they fall on the acceleration conveyor belt (1) in a non-aligned manner or crossways with respect to its first discontinuous rows (1.22).

Additionally, the stabilisation means (1.21) that make up the first discontinuous row (1.22), for example, projections (1.211) and/or recesses (1.212), could be arranged alternately on both sides of a common longitudinal centre line (c), as a "zigzag", as shown in the third embodiment of the acceleration conveyor belt (1) seen in Figure 8.

In the embodiment shown in Figure 8, arranged across the width of the acceleration conveyor belt (1), is a preferred pattern consisting of a first discontinuous row (1.22) with its stabilisation means (1.21) arranged in "zigzag" between two first "normal" discontinuous rows (1.22), i.e., the latter, with their stabilisation means (1.21) arranged aligned at the longitudinal centre line (c) .

However, there are other possible configuration patterns of this third embodiment of the acceleration conveyor belt (1), which are not shown in the figures due to their large number but which are evident to those skilled in the art from the embodiment of Figure 8. For example, the acceleration conveyor belt (1) with all its first discontinuous rows (1.22) arranged in "zigzag", or a first "normal" discontinuous row (1.22) arranged between two first discontinuous rows (1.22) arranged in "zigzag", or, the first discontinuous rows (1.22) arranged in "zigzag" at the centre of the acceleration conveyor belt (1) flanked by each of first "normal" discontinuous rows (1.22), or, the first "normal" discontinuous rows (1.22) at the centre of the acceleration conveyor belt (1) flanked by each of first discontinuous rows (1.22) arranged in "zigzag", among other possible configurations of the acceleration conveyor belt (1) that includes at least a first discontinuous row (1.22) arranged in "zigzag".

In a fourth embodiment of the acceleration conveyor belt (1), shown in Figure 9, the stabilisation means (1.21), for example, projections (1.211) and/or recesses (1.212), could be arranged in a plurality of second continuous rows (1.23) extended obliquely to the movement of the acceleration conveyor belt (1).

It is preferred that the second continuous rows (1.23) are arranged such that they form two groups of second continuous rows (1.231, 1.232), where, alternately, the second continuous rows (1.23) of both groups (1.231, 1.232) converge towards a same side, along the acceleration conveyor belt (1).

Preferably, each group of second continuous rows (1.231, 1.232) comprises between 3 and 6 second continuous rows (1.23).

In any case, it is preferred that the second continuous rows (1.23) be separated from each other between 170 mm and 230 mm, or, if they are recesses (1.212), the latter are preferred to have a width between 50 mm and 300 mm In any case, it is sought that between them, even waste (2) of packages having a larger diameter can be trapped.

Likewise, in a fifth embodiment of the acceleration conveyor belt (1), shown in Figure 12, the stabilisation means (1.21) are a plurality of projections (1.212) shaped as a "horseshoe" with openings (1.2121) arranged towards the direction of movement of the acceleration conveyor belt (1).

Preferably, the "horseshoe" projections (1.212) are arranged in a plurality of second discontinuous rows (1.25) extended parallel to the movement of the acceleration conveyor belt (1), such that the projections (1.212) are arranged "in staggered formation" along the acceleration conveyor belt (1).

In the same way as in the previous embodiments of the acceleration conveyor belt (1), it is preferred that the second discontinuous rows (1.25) be separated from each other between 170 mm and 230 mm. Likewise, the projections (1.212) of a same second discontinuous row (1.25) could be separated between 170 mm and 230 mm.

Thus, when dumping the waste (2) of packages on the acceleration conveyor belt (1), these can be retained, either, in the openings (1.2121) of the projections (1.212), between two projections (1.212) of second contiguous discontinuous rows (1.25), or between two contiguous projections (1.212) of a same second discontinuous row (1.25), as waste (2) falls on the acceleration conveyor belt (1).

In any case, as in the previous embodiments, it is achieved that the waste (2) maintains a same position on the acceleration conveyor belt (1) between the infrared sensor (3) and the blower-valve block (4), while said waste (2) is distributed homogeneously on the available width of the acceleration conveyor belt (1), so that a laminar flow of material is obtained on the acceleration conveyor belt (1) with the minimum overlapping of waste items (2) on each other.

In any of the previous embodiments of the acceleration conveyor belt (1) it is achieved to effectively perform the sorting of the waste (2) of material to be sorted, for example, plastic packages, increasing the efficiency of the machine by preventing the loss of recyclable waste

## Claims

1. Machine for the optical separation of waste, comprising:
- An acceleration conveyor belt (1), arranged substantially horizontally, adapted to support and transport at least one waste item (2) to be sorted,
- an infrared sensor (3), arranged above the acceleration conveyor belt (1), adapted to sense a wavelength of the waste item (2) transported by the acceleration conveyor belt (1),
- a blower-valve block (4), arranged below an end (1.1) of the acceleration conveyor belt (1), adapted to drive the waste item (2) towards a specific blow-separation box (5),
- a CPU (6) adapted to actuate the blower-valve block (4) at a determined moment in time, when the wavelength of the sensed waste item (2) corresponds to a predetermined wavelength value, where, the moment in time is determined based on a speed of the acceleration conveyor belt (1) and a distance between the infrared sensor (3) and the blower-valve block (4),
wherein an upper face (1.2) of the acceleration conveyor belt (1) comprises a plurality of stabilisation means (1.21), **characterised in that** the stabilisation means (1.21) are in the form of projections (1.211) and/or recesses (1.212) adapted to trap the waste item (2) between two projections (1.211) or in the recess (1.212), for preventing the rolling of the waste item (2) on the acceleration conveyor belt (1), maintaining the waste item (2) in a same position on the acceleration conveyor belt (1) between the infrared sensor (3) and the blower-valve block (4).

2. Machine according to claim 1, wherein the stabilisation means (1.21) are a plurality of projections (1.211) by way of first continuous rows (1.24) extended parallel to each other along the acceleration conveyor belt (1).

3. Machine according to claim 2, wherein the projection (1.211) comprises a flat upper surface (1.2111) parallel to the upper face (1.2) of the acceleration conveyor belt (1) .

4. Machine according to claim 2, wherein the projection (1.211) comprises an upper surface (1.2111) formed by a plurality of sections of inclined planes (1.21111) arranged contiguously and with slopes towards the same direction.

5. Machine according to claim 2, wherein the projection (1.211) comprises an upper surface (1.2111) formed by a plurality of inclined planes (1.21111, 1.21112) arranged contiguously and with slopes towards alternate opposite directions.

6. Machine according to claim 2, wherein the projection (1.211) comprises a corrugated upper surface (1.2111).

7. Machine according to claim 1, wherein the stabilisation means (1.21) are arranged in a plurality of first discontinuous rows (1.22) extended parallel to the movement of the acceleration conveyor belt (1).

8. Machine according to claim 7, wherein the stabilisation means (1.21) that make up the first discontinuous row (1.22) are projections (1.211) that are separated from each other between 170 mm and 230 mm.

9. Machine according to claim 7, wherein the stabilisation means (1.21) that make up the first discontinuous row (1.22) are alternately arranged on both sides of a common longitudinal centre line (c), as a "zigzag".

10. Machine according to claim 1, wherein the stabilisation means (1.21) are arranged in a plurality of second continuous rows (1.23) extended obliquely to the movement of the acceleration conveyor belt (1).

11. Machine according to claim 10, wherein the second continuous rows (1.23) are arranged in such a way that they form two groups of second continuous rows (1.231, 1.232), where, alternately, the second continuous rows (1.23) of both groups (1.231, 1.232) converge to a same side, along the acceleration conveyor belt (1).

12. Machine according to claim 11, wherein each group of second continuous rows (1.231, 1.232) comprises between 3 and 6 second continuous rows (1.23).

13. Machine according to claim 1, wherein the stabilisation means (1.21) are a plurality of projections (1.212) shaped as a "horseshoe" with openings (1.2121) arranged towards the direction of movement of the acceleration conveyor belt (1).

14. Machine according to claim 13, wherein the "horseshoe" projections (1.212) are arranged in a plurality of second discontinuous rows (1.25) extended parallel to the movement of the acceleration conveyor belt (1), such that the projections (1.212) are arranged "in staggered formation" along the acceleration conveyor belt (1).

15. Machine according to claim 2, 7, 10 or 14, wherein the first continuous rows (1.24), the second continuous rows (1.23), the first discontinuous rows (1.22), or the second discontinuous rows (1.25) are separated from each other between 170 mm and 230 mm.

## Patentansprüche

1. Maschine für die optische Trennung von Abfällen, die umfasst:
- ein Beschleunigungsförderband (1), das im Wesentlichen horizontal angeordnet und ausgelegt ist, mindestens einen zu sortierenden Abfallgegenstand (2) zu tragen und zu befördern,
- einen oberhalb des Beschleunigungsförderbandes (1) angeordneten Infrarotsensor (3), der ausgelegt ist, eine Wellenlänge des vom Beschleunigungsförderband (1) beförderten Abfallgegenstands (2) zu erfassen,
- einen Gebläseventilblock (4), der unterhalb eines Endes (1.1) des Beschleunigungsförderbandes (1) angeordnet ist und den Abfallgegenstand (2) in Richtung eines bestimmten Blastrennkastens (5) treiben kann,
- eine CPU (6), die ausgelegt ist, den Gebläseventilblock (4) zu einem bestimmten Zeitpunkt zu betätigen, wenn die Wellenlänge des erfassten Abfallgegenstands (2) einem vorgegebenen Wellenlängenwert entspricht, wobei der Zeitpunkt basierend auf einer Geschwindigkeit des Beschleunigungsförderbandes (1) und einem Abstand zwischen dem Infrarotsensor (3) und dem Gebläseventilblock (4) bestimmt wird,
wobei eine Oberseite (1.2) des Beschleunigungsförderbandes (1) eine Vielzahl von Stabilisierungsmitteln (1.21) umfasst, **dadurch gekennzeichnet, dass** die Stabilisierungsmittel (1.21) in Form von Vorsprüngen (1.211) und/oder Vertiefungen (1.212) ausgebildet sind, die ausgelegt sind, den Abfallgegenstand (2) zwischen zwei Vorsprüngen (1.211) oder in der Vertiefung (1.212) festzuhalten, um das Rollen des Abfallgegenstands (2) auf dem Beschleunigungsförderband (1) zu verhindern, wobei der Abfallgegenstand (2) in gleicher Position auf dem Beschleunigungsförderband (1) zwischen dem Infrarotsensor (3) und dem Gebläseventilblock (4) gehalten wird.

2. Maschine nach Anspruch 1, wobei die Stabilisierungsmittel (1.21) eine Vielzahl von Vorsprüngen (1.211) der Art erster durchgehender Reihen (1.24) sind, die sich parallel zueinander entlang des Beschleunigungsförderbandes (1) erstrecken.

3. Maschine nach Anspruch 2, wobei der Vorsprung (1.211) eine flache Oberseite (1.2111) umfasst, die parallel zur Oberseite (1.2) des Beschleunigungsförderbandes (1) ist.

4. Maschine nach Anspruch 2, wobei der Vorsprung (1.211) eine obere Fläche (1.2111) umfasst, die aus einer Vielzahl von Abschnitten geneigter Ebenen (1.21111) ausgebildet ist, die durchgehend und mit Neigungen in die gleiche Richtung angeordnet sind.

5. Maschine nach Anspruch 2, wobei der Vorsprung (1.211) eine obere Fläche (1.2111) umfasst, die aus einer Vielzahl von geneigten Ebenen (1.21111, 1.21112) ausgebildet ist, die durchgehend und mit Neigungen in abwechselnd entgegengesetzte Richtungen angeordnet sind.

6. Maschine nach Anspruch 2, wobei der Vorsprung (1.211) eine gewellte obere Fläche(1.2111) aufweist.

7. Maschine nach Anspruch 1, wobei die Stabilisierungsmittel (1.21) in einer Vielzahl von ersten nicht durchgehenden Reihen (1.22) angeordnet sind, die sich parallel zur Bewegung des Beschleunigungsförderbandes (1) erstrecken.

8. Maschine nach Anspruch 7, wobei die Stabilisierungsmittel (1.21), die die erste nicht durchgehende Reihe (1.22) bilden, Vorsprünge (1.211) sind, die zwischen 170 mm und 230 mm voneinander beabstandet sind.

9. Maschine nach Anspruch 7, wobei die Stabilisierungsmittel (1.21), die die erste nicht durchgehende Reihe (1.22) bilden, abwechselnd auf beiden Seiten einer gemeinsamen Längsmittellinie (c) im "Zickzack" angeordnet sind.

10. Maschine nach Anspruch 1, wobei die Stabilisierungsmittel (1.21) in einer Vielzahl von zweiten durchgehenden Reihen (1.23) angeordnet sind, die sich schräg zur Bewegung des Beschleunigungsförderbandes (1) erstrecken.

11. Maschine nach Anspruch 10, wobei die zweiten durchgehenden Reihen (1.23) so angeordnet sind, dass sie zwei Gruppen zweiter durchgehender Reihen (1.231, 1.232) bilden, wobei abwechselnd die zweiten durchgehenden Reihen (1.23) beider Gruppen(1.231, 1.232) entlang des Beschleunigungsförderbandes (1) auf derselben Seite zusammenlaufen.

12. Maschine nach Anspruch 11, wobei jede Gruppe zweiter durchgehender Reihen (1.231, 1.232) zwischen 3 und 6 zweite durchgehende Reihen (1.23) umfasst.

13. Maschine nach Anspruch 1, wobei die Stabilisierungsmittel (1.21) eine Vielzahl von hufeisenförmigen Vorsprüngen (1.212) mit in Richtung der Bewegung des Beschleunigungsförderbandes (1) angeordneten Öffnungen (1.2121) sind.

14. Maschine nach Anspruch 13, bei der die hufeisenförmigen Vorsprünge (1.212) in einer Vielzahl von zweiten nicht durchgehenden Reihen (1.25) angeordnet sind, die sich parallel zur Bewegung des Beschleunigungsförderbandes (1) erstrecken, sodass die Vorsprünge (1.212) "in versetzter Konfiguration" entlang des Beschleunigungsförderbandes (1) angeordnet sind.

15. Maschine nach Anspruch 2, 7, 10 oder 14, wobei die ersten durchgehenden Reihen (1.24), die zweiten durchgehenden Reihen (1.23), die ersten nicht durchgehenden Reihen (1.22) oder die zweiten nicht durchgehenden Reihen (1.25) voneinander durch zwischen 170 mm und 230 mm beabstandet sind.

## Revendications

1. Machine de séparation optique de déchets, comprenant :
- une bande convoyeuse d'accélération (1), disposée sensiblement horizontalement, adaptée pour supporter et transporter au moins un déchet (2) à trier,
- un capteur infrarouge (3), disposé au-dessus de la bande convoyeuse d'accélération (1), adapté pour détecter une longueur d'onde du déchet (2) transporté par la bande convoyeuse d'accélération (1),
- un bloc souffleur-vanne (4), disposé en dessous d'une extrémité (1.1) de la bande convoyeuse d'accélération (1), adapté pour entraîner le déchet (2) vers un caisson de séparation par soufflage (5) spécifique,
- une unité centrale (6) adaptée pour actionner le bloc souffleur-vanne (4) à un instant déterminé, lorsque la longueur d'onde du déchet (2) détecté correspond à une valeur de longueur d'onde prédéterminée, où l'instant est déterminé en fonction d'une vitesse de la bande convoyeuse d'accélération (1) et d'une distance entre le capteur infrarouge (3) et le bloc souffleur-vanne (4),
dans laquelle une face supérieure (1.2) de la bande convoyeuse d'accélération (1) comprend une pluralité de moyens de stabilisation (1.21), **caractérisée en ce que** les moyens de stabilisation (1.21) se présentent sous la forme de saillies (1.211) et/ou d'évidements (1.212) adaptés pour emprisonner le déchet (2) entre deux saillies (1.211) ou dans l'évidement (1.212), pour empêcher le roulement du déchet (2) sur la bande convoyeuse d'accélération (1), maintenir le déchet (2) dans une même position sur la bande convoyeuse d'accélération (1) entre le capteur infrarouge (3) et le bloc souffleur-vanne (4).

2. Machine selon la revendication 1, dans laquelle les moyens de stabilisation (1.21) sont une pluralité de saillies (1.211) au moyen de premières rangées continues (1.24) s'étendant parallèlement les unes aux autres le long de la bande convoyeuse d'accélération (1).

3. Machine selon la revendication 2, dans laquelle la saillie (1.211) comprend une surface supérieure plane (1.2111) parallèle à la face supérieure (1.2) de la bande convoyeuse d'accélération (1).

4. Machine selon la revendication 2, dans laquelle la saillie (1.211) comprend une surface supérieure (1.2111) formée par une pluralité de sections de plans inclinés (1.21111) disposés de manière contiguë et avec des pentes vers la même direction.

5. Machine selon la revendication 2, dans laquelle la saillie (1.211) comprend une surface supérieure (1.2111) formée par une pluralité de plans inclinés (1.21111, 1.21112) disposés de manière contiguë et avec des pentes alternées vers des directions opposées.

6. Machine selon la revendication 2, dans laquelle la saillie (1.211) comprend une surface supérieure ondulée (1.2111).

7. Machine selon la revendication 1, dans laquelle les moyens de stabilisation (1.21) sont disposés en une pluralité de premières rangées discontinues (1.22) étendues parallèlement au déplacement de la bande convoyeuse d'accélération (1).

8. Machine selon la revendication 7, dans laquelle les moyens de stabilisation (1.21) qui composent la première rangée discontinue (1.22) sont des saillies (1.211) séparées les unes des autres entre 170 mm et 230 mm.

9. Machine selon la revendication 7, dans laquelle les moyens de stabilisation (1.21) qui composent la première rangée discontinue (1.22) sont disposés alternativement de part et d'autre d'un axe longitudinal commun (c), en « zigzag ».

10. Machine selon la revendication 1, dans laquelle les moyens de stabilisation (1.21) sont disposés en une pluralité de secondes rangées continues (1.23) étendues obliquement par rapport au déplacement de la bande convoyeuse d'accélération (1).

11. Machine selon la revendication 10, dans laquelle les secondes rangées continues (1.23) sont disposées de telle sorte qu'elles forment deux groupes de secondes rangées continues (1.231, 1.232), où, alternativement, les secondes rangées continues (1.23) des deux groupes (1.231, 1.232) convergent d'un même côté, le long de la bande convoyeuse d'accélération (1).

12. Machine selon la revendication 11, dans laquelle chaque groupe de seconds rangs continus (1.231, 1.232) comprend entre 3 et 6 seconds rangs continus (1.23).

13. Machine selon la revendication 1, dans laquelle les moyens de stabilisation (1.21) sont une pluralité de saillies (1.212) en forme de « fer à cheval » avec des ouvertures (1.2121) disposées dans le sens de déplacement de la bande convoyeuse d'accélération (1).

14. Machine selon la revendication 13, dans laquelle les saillies « en fer à cheval » (1.212) sont disposées en une pluralité de secondes rangées discontinues (1.25) s'étendant parallèlement au déplacement de la bande convoyeuse d'accélération (1), de sorte que les saillies (1.212) sont disposées « en quinconce » le long de la bande convoyeuse d'accélération (1).

15. Machine selon la revendication 2, 7, 10 ou 14, dans laquelle les premières rangées continues (1.24), les secondes rangées continues (1.23), les premières rangées discontinues (1.22), ou les secondes rangées discontinues (1.25) sont séparées les unes des autres autre entre 170 mm et 230 mm.
